# EUROPÄISCHE PATENTANMELDUNG

(11) **EP 2 401 908 A1**
(43) Veröffentlichungstag der Anmeldung: **04.01.2012**
(21) Anmeldenummer: 10004280.3
(22) Anmeldetag: 22.04.2010
(51) Int. Cl.: A01G 1/02, A01D 45/00

(54) **Spargelerntegerät als Geräteträger für Spargelstecheinheit und Universalgeräteträger für beliebige Erntesysteme**

(30) Priorität: 22.04.2009 DE 202009005890 U
(71) Anmelder: Phoenix Technology Ltd., Warwick CV34 8EW (GB); URAG AG, 6274 Eschenbach (CH)
(72) Erfinder: Lewandowski, Andreas, 78239 Rielasingen-Worblingen (DE)
(74) Vertreter: Lewandowski, Axel

(57) **Zusammenfassung**

Ein Spargelerntegerät als Geräteträger für eine Spargelstecheinheit und universal Geräteträger für Erntesysteme ist so aufgebaut, dass auf einem kompakten, leichten Fahrzeugrahmen ein ergonomisch optimierter Arbeitsplatz, ein Lenk- und Antriebssystem, ein Verfahrsystem, eine automatische Stecheinheit oder eine andere Ernteeinheit, ein Transportsystem und eine Anhängevorrichtung aufgebaut werden. Des weiteren lässt sich das Fahrzeug mit wenigen Handgriffen zu einem Einachsanhänger umbauen und kann so durch ein Zugfahrzeug im Straßenverkehr und auf dem Feld bewegt werden und ist somit mobil auch zwischen mehreren kleinen Feldern einsetzbar.

## Beschreibung

Die Erfindung betrifft ein "Spargelerntegerät als Geräteträger für eine Spargelstecheinheit und universal Geräteträger für Erntesysteme".

Aus dem Stand der Technik sind unterschiedliche Bauformen von Spargelerntegeräten bekannt.

Spargelerntegeräte oder Spargelerntemaschinen dienen der Verbesserung der Spargelernte. Spargel wird derzeit hauptsächlich von Hand geerntet. Weißer Spargel wird in trapezförmig aufgeschütteten Reihen angepflanzt. Wenn der Spargel die Oberfläche durchbricht wird er gestochen. Hierzu wird er freigelegt und mit einer gebogenen Klinge abgeschnitten, gestochen. Der Nutzen der Maschinen liegt darin, den mühsamen Ernteprozess, der zu meist in gebückter Haltung durchgeführt wird, zu erleichtern oder ihn sogar zu automatisieren und somit die Produktivität zu steigern sowie die Erntequalität zu verbessern. Es gibt grundsätzlich drei verschiedene Arten von Maschinen.

Die einfachste Art ist ein fahrbarer Arbeitsplatz. Die Person, die den Spargel erntet, sitzt in einem selbstfahrenden Wagen nahe der trapezförmig aufgeschütteten Reihen. Die Arbeitsposition des Bedieners wird verbessert, jedoch wird das Stechen des Spargels weiterhin manuell durchgeführt. Die Qualität und die Quantität des Erntens ist daher weiterhin von den persönlichen Fähigkeiten des Bedieners abhängig.

Die zweite Maschinenvariante ist eine vollautomatische Erntemaschine. Hierzu wird die trapezförmig aufgeschüttete Reihe von zwei scheibenförmigen, rotierenden Klingen in einer bestimmten Höhe horizontal aufgetrennt. Die obere Hälfte der Reihe, bestehend aus Erde und abgetrennten Spargel, wird auf ein Transportband abtransportiert und die abgetrennten Spargel werden ausgesiebt. Aus der gesiebten Erde wird dann eine neue Reihe geformt. Der Nachteil dieser Erntemethode ist, dass sowohl Spargel mit der richtigen Größe aber auch kleine Pflanzen abgeschnitten werden. Das Ergebnis ist deshalb quantitativ sehr hoch, qualitativ ist das Ernteergebnis schlecht.

Der dritte Ernteprozess läuft teilautomatisch ab. Der Bediener fährt auf der Maschine mit. Er steuert eine Stecheinheit individuell über den zu erntenden Spargel. Die Stecheinheit wird betätigt und jeder Spargel einzeln geerntet und abgelegt. Die Quantität der Ernte ist höher als bei der rein manuellen Ernte, die Qualität ist sehr hoch, da es sich um einen automatischen, reproduzierbaren Prozess handelt. Der Nachteil dieser Maschinen ist die Größe der Maschine und die großen Investi-tionskosten. Ebenso ist es von Nachteil, dass die Maschinen für eine große Anbaufläche ausgelegt sind. In den Hauptanbaugebieten sind jedoch nur kleine und mittlere Felder üblich.

Ausgehend von diesem Stand der Technik liegt der Erfindung insoweit die Aufgabe zugrunde, ein Spargelerntegerät anzugeben, das eine möglichst hohe Erntequalität durch einen automatisierten Ernteprozess aufweist und zu dem mobil auf kleinen Anbauflächen einsetzbar ist, um somit die Arbeitsbedingungen und die Produktivität entscheidend zu verbessern.

Diese Aufgabe wird dadurch gelöst, dass auf einem kompakten, leichten Fahrzeugrahmen ein ergonomisch optimierter Arbeitsplatz, ein Lenk- und Antriebssystem, ein Verfahrsystem, eine automatische Stecheinheit, ein Transportsystem und eine Anhängevorrichtung aufgebaut werden. Des weiteren lässt sich das Fahrzeug mit wenigen Handgriffen zu einem Einachsanhänger umbauen und kann so durch ein Zugfahrzeug im Straßenverkehr und auf dem Feld bewegt werden und ist somit mobil auch zwischen mehreren kleinen Feldern einsetzbar.

Weitere vorteilhafte Ausführungsformen sind in den Unteransprüchen gekennzeichnet.

Das erfindungsgemäße Spargelerntegerät wird nun anhand von bevorzugten Ausführungsbeispielen mit Hilfe der beigefügten Zeichnungen näher erläutert. Es zeigen:
- Fig. 1: eine perspektivische Ansicht eines Spargelerntegeräts,
- Fig. 2: eine Seitenansicht eines Spargelerntegeräts,
- Fig. 3: eine Vorderansicht eines Spargelerntegeräts in Arbeitsposition,
- Fig. 4: eine Vorderansicht eines Spargelerntegeräts in Stechposition,
- Fig. 5: eine perspektivische Ansicht eines Spargelerntegeräts in Ablegposition,
- Fig. 6: eine Seitenansicht eines Spargelerntegeräts in Transportposition.

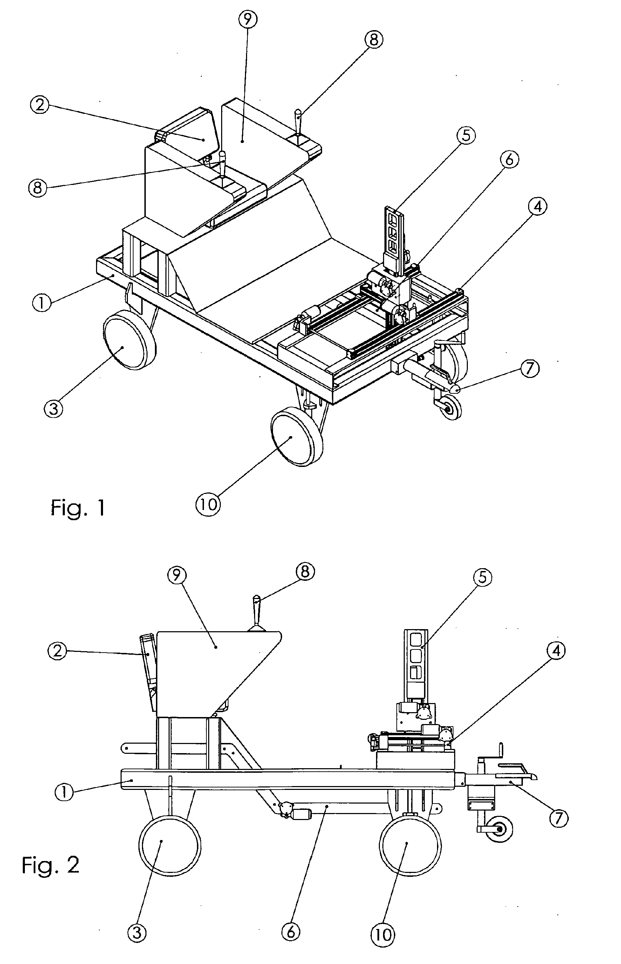

Die Fig. 1 zeigt eine perspektivische Ansicht eines Spargelerntegeräts. Auf einem Fahrzeugrahmen (1) sind die Einzelkomponenten des Erntegeräts montiert. Ein ergonomisch gestalteter Arbeitsplatz (2) ermöglicht dem Bediener den Ernteprozess zu steuern. Eine besonders bevorzugte Gestaltung des Arbeitsplatzes ermöglicht dem Bediener neben einer sitzenden Arbeitsposition auch ein Arbeiten im Stehen. Hierzu lassen sich die Seitenteile (9) mit den Bedienelementen (8) auf die entsprechenden Positionen verstellen. Das Fahrzeug wird mit einem Lenk- und Antriebssystem angetrieben. Das abgebildete bevorzugte Ausführungsbeispiel zeigt eine Antriebsvariante bestehend aus zwei elektrischen Radnabenmotoren. Radnabenmotoren sind eine sehr kompakte Antriebsvariante. In etwa den selben Abmessungen einer Felge ist der Antriebsmotor untergebracht. Durch unterschiedliche Drehzahlen und Drehrichtungen lässt sich das Fahrzeug direkt lenken. Die beiden vorderen Räder (10) sind frei drehbar angebracht. In der erfindungsgemäßen Ausführung wird die Lenkung über einen Joystick (8) ermöglicht. Es ist hier aber auch ein beliebiges Antriebssystem denkbar. Auch die Lenkung kann über ein Lenkrad und ein Lenkgestänge erfolgen. Des weiteren ist auf dem Rahmen (1) eine Verfahreinrichtung (4) montiert.

Die Verfahreinrichtung (4) ermöglicht das Positionieren der Stecheinheit (5). Eine Stecheinheit (5) ist aus dem Gebrauchsmuster DE 20 2004 000 431 U1 bekannt. Der gestochene Spargel wird nach dem Stechen automatisch auf dem Transportband (6) abgelegt. Das Transportband (6) führt den Spargel zur Rückseite der Maschine. An der Vorderseite der Maschine ist eine idealerweise abnehmbare Anhängevorrichtung (7) angebracht.

Die Fig. 2 zeigt eine Seitenansicht eines Spargelerntegeräts. Die Ansicht zeigt nochmals die Komponenten des erfindungsgemäßen Aufbaus. Auf einem kompakten, leichten Fahrzeugrahmen (1) ist ein ergonomisch optimierter Arbeitsplatz (2), ein Antriebssystem (3), eine Lenkung (10), ein Verfahrsystem (4), eine automatische Stecheinheit (5), ein Transportsystem (6) und eine Anhängevorrichtung (7) aufgebaut. Die Arbeitsposition des Bedieners lässt sich durch Verstellen der Seitenteile (9) zwischen einer sitzenden und einer stehenden Haltung variieren. Es ist aber genauso vorstellbar in einer vereinfachten Version nur einen Sitzarbeitsplatz oder einen Steharbeitsplatz einzubauen. Mit wenigen Handgriffen lässt sich durch An- und Abbau der Anhängevorrichtung (7) zwischen selbstfahrenden Fahrzeug und Einachsanhänger wechseln. Das Erntegerät kann so durch ein Zugfahrzeug im Straßenverkehr bewegt werden. Es ist aber auch in einer weiter vereinfachten Variante möglich die Lenkräder (10) und das Antriebssystem (3) wegzulassen und das Erntegerät als Einachsanhänger durch ein Zugfahrzeug bei der Ernte zu bewegen.

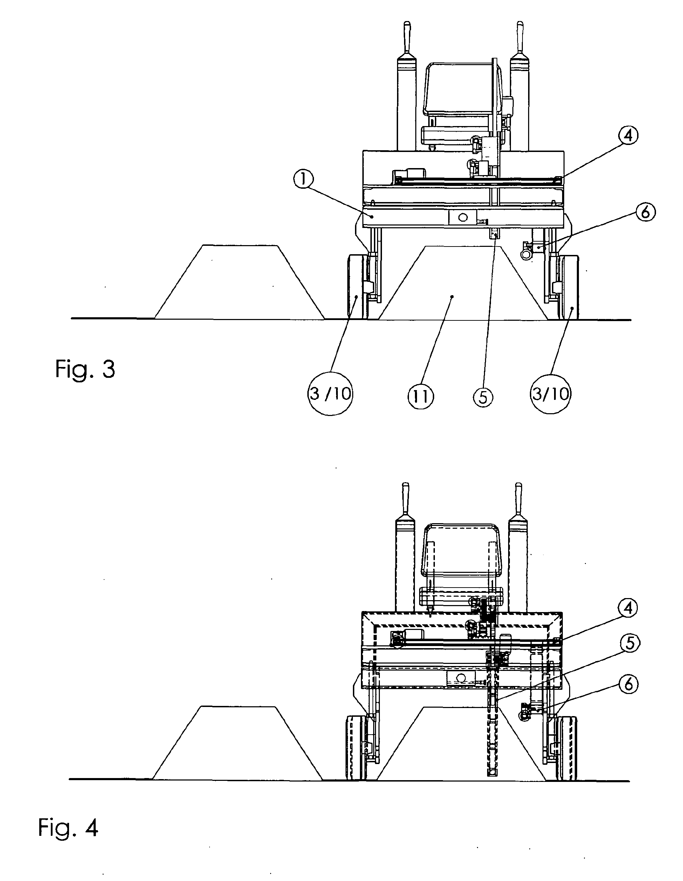

Die Fig. 3 zeigt eine Vorderansicht eines Spargelerntegeräts in Arbeitsposition. Das Erntegerät nimmt die trapezförmige Reihe zwischen die Antriebs- und Lenkräder (3 / 10). Der Rahmen (1) befindet sich über der Reihe (11). Über die Verfahreinrichtung (4) lässt sich die Stecheinheit (5) in jede beliebige Position über der Reihe (11) bringen. Die Transporteinrichtung (6) ist unterhalb des Rahmens (1) angebracht. Die Stecheinheit (5) kann so in der oberen Position den Spargel auf dem Transportband (6) ablegen.

Die Fig. 4 zeigt eine Vorderansicht eines Spargelerntegeräts in Stechposition. Zum Stechen des Spargels wird die Stecheinheit (5) mittels der Verfahreinrichtung (4) über dem zuerntenden Spargel positioniert. Die Stecheinheit (5) wird dann in die Erde eingetaucht und schneidet dann den Spargel ab. Der geschnittene Spargel wird durch die Stecheinheit (5) aus dem Boden herausgehoben und auf dem Transportsystem (6) abgelegt.

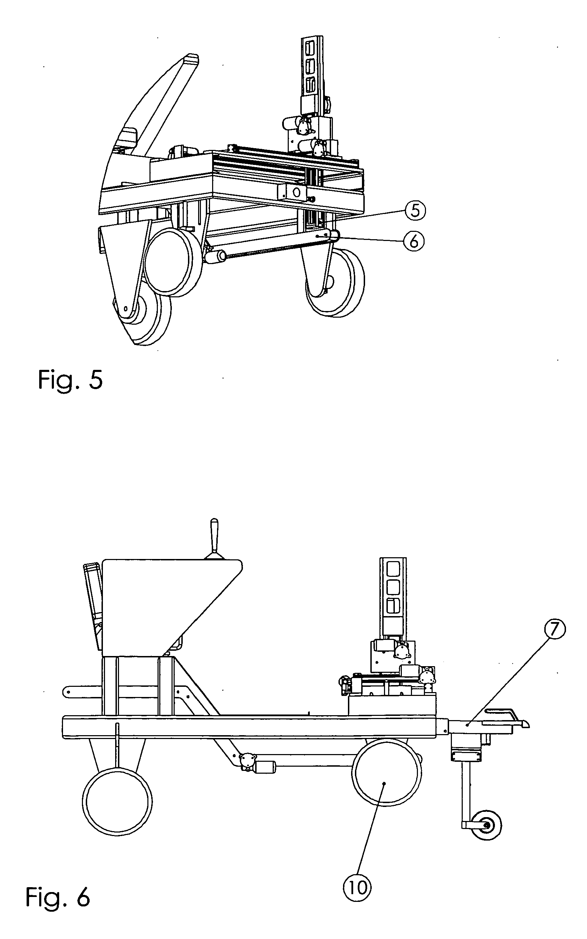

Die Fig. 5 zeigt eine perspektivische Ansicht eines Spargelerntegeräts in Ablegposition. Durch die Verfahreinrichtung (4) wird die Stecheinheit (5) mit dem geernteten Spargel über das Transportsystem (6) positioniert. Die Stecheinheit (5) öffnet sich und der Spargel kann so auf dem Transportband (6) abgelegt und abtransportiert werden.

Die Fig. 6 zeigt eine Seitenansicht eines Spargelerntegeräts in Transportposition. In der Transportposition sind die Lenkräder (10) in einer oberen Position arretiert. An der Vorderseite ist die Anhängevorrichtung (7) eingesteckt. Das Erntegerät ist so zum Einachsanhänger umgerüstet und kann von einem Zugfahrzeug transportiert werden.

## Patentansprüche

1. Ein Spargelerntegerät **dadurch gekennzeichnet, dass** es als Fahrzeug eine mechanische Stecheinheit über dem zu erntenden Spargel positioniert und durch Verändern einer Achse zu einem Einachsanhänger umgebaut werden kann.

2. Ein Spargelerntegerät nach Anspruch 1, **dadurch gekennzeichnet, dass** der Arbeitsplatz ergonomisch gestaltet ist und der Bediener sowohl sitzen als auch stehend arbeiten kann.

3. Ein Spargelerntegerät nach einem der vorgehenden Ansprüche, **dadurch gekennzeichnet, dass** der Antrieb als Radnabenmotor ausgeführt ist.

4. Ein Spargelerntegerät nach einem der vorgehenden Ansprüche, **dadurch gekennzeichnet, dass** die Anhängevorrichtung abnehmbar ist.

5. Ein Spargelerntegerät nach einem der vorgehenden Ansprüche, **dadurch gekennzeichnet, dass** die Vorderräder in der Transportstellung nach oben verstellt werden.

6. Ein Spargelerntegerät nach einem der vorgehenden Ansprüche, **dadurch gekennzeichnet, dass** die Lenkung über einen Joystick erfolgt.

7. Ein Spargelerntegerät nach Anspruch 1 **dadurch gekennzeichnet, dass** entsprechend Fig. 6 die Stecheinheit ein beliebiges Entesystem für verschiedenes Erntegut sein kann und das Erntegerät so universell einsetzbar ist.
